**Europäisches Patentamt**

**European Patent Office**

**Office européen des brevets**

(19)

(11) Veröffentlichungsnummer: **0 262 515 B1**

(12) ## EUROPÄISCHE PATENTSCHRIFT

(45) Veröffentlichungstag der Patentschrift: **28.08.91**

(51) Int. Cl.⁵: **B01D  46/10**, B01D 46/42, F24F 13/00

(21) Anmeldenummer: **87113581.0**

(22) Anmeldetag: **17.09.87**

(54) **Filterrahmen-Gitterwerk.**

(30) Priorität: **03.10.86 DE 8626425 U**

(43) Veröffentlichungstag der Anmeldung:
**06.04.88 Patentblatt  88/14**

(45) Bekanntmachung des Hinweises auf die
Patenterteilung:
**28.08.91 Patentblatt  91/35**

(84) Benannte Vertragsstaaten:
**AT BE CH DE ES FR GB GR IT LI LU NL SE**

(56) Entgegenhaltungen:
EP-A- 0 146 958          EP-A- 0 202 110
AU-B- 417 359            DE-U- 7 413 850
GB-A- 1 182 527          US-A- 4 511 380
US-A- 4 555 255

(73) Patentinhaber: **Kessler & Luch GmbH**
**Rathenaustrasse 8 Postfach 58 10**
**W-6300 Giessen 1(DE)**

(72) Erfinder: **Schmidt, Uwe, Dr.-Ing.**
**Lerchenweg 2**
**W-3554 Lohra(DE)**
Erfinder: **Kohnen, Franz,**
**Hagstrasse 14**
**W-6300 Giessen-Wieseck(DE)**
Erfinder: **Hau, Dieter,**
**Frankfurter Strasse 26**
**W-6307 Linden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Filterrahmen-Gitterwerk zum Bestücken mit Luftfilterzellen, insbesondere für Zuluftfilterwände oder Zuluftfilterdecken Reiner Räume, bestehend aus zwei-, drei- oder vierarmigen Montagestücken und die Montagestücke verbindenden Profilabschnitten, wobei jeder Profilabschnitt im wesentlichen aus einem längs verlaufenden Kastenprofil, an das mindestens einseitig ein das Auflager der Luftfilterzellen bildender Flansch angeformt ist, gebildet ist, wobei die Arme der Montagestücke als Anschlußarme für die Profilabschnitte, zumindest deren Außenprofil im Bereich der angeformten Flansche fortsetzen und wobei die einander zugewandten Stirnflächen jeder der Profilabschnitte und der ihnen zugeordneten Anschlußarme der Montagestücke als Paßflächen ausgebildet und mittels Verbindungsmittel unter Zwischenfügung von Dichtungen gegeneinander preßbar sind.

In bezüglich Staubbeeinflussung kritischen Arbeitsbereichen wird als Fertigungshilfe die Rein-Raum-Technik angewandt. Eine wesentliche Maßnahme zum Erzielen reiner Umgebungsbedingungen ist dabei eine Luftführung im Sinne einer turbulenzarmen Verdrängungsströmung sowie die Reinigung der zugeführten Luft unmittelbar vor dem Austritt in den Reinen Raum bzw. reinen Arbeitsbereich. Um dies zu erreichen werden Zuluftfilterwände bei horizontaler Strömung bzw. Zuluftfilterdecken bei vertikaler Strömung eingesetzt; die Zuluftfilterwände bzw. die Zuluftfilterdecken bestehen aus einem Filterrahmen-Gitterwerk, das die Luftfilterzellen enthält. Dabei werden die Luftfilterzellen - z.B. nach einem Vorschlag der DE-C- 15 07 773 - mit Hilfe mechanischer Spannelemente auf am Gitterwerk vorgesehener umlaufender Flansche gedrückt, das die zwischen der Filterzelle und dem Flansch befindliche Dichtung die gewünschte Dichtheit sicherstellt. Eine andere Möglichkeit - nach einem Vorschlag der DE-B- 18 15 460 - ist der umlaufende Flansch als Nut ausgebildet, in dem sich eine Zäh-Viskose, gegebenenfalls erhärtende Sperrflüssigkeit befindet, in die ein am Filterrahmen vorgesehener Stehflansch eintaucht. Mit Hilfe dieser Maßnahmen läßt sich ein dichtes Einsetzen von Filterzellen in ein Filterrahmen-Gitterwerk bewerkstelligen.

Nach einem Vorschlag der DE-A- 35 35 799 wird ein derartiges Filterrahmen-Gitterwerk dadurch erhalten, daß entsprechend abgelängte Profilabschnitte mit Montagekreuzen so verbunden werden, daß eine Vielzahl rechteckiger Aufnahmeöffnungen zur Aufnahme von Filtereinsätzen entsteht. Die mechanische Verbindung zwischen den Trägerprofilabschnitten und den Montagekreuzen wird dabei durch in die Hohlräume der Anschlußarme und der Trägerprofile eingeführte Klötze hergestellt, die sowohl mit den Montagekreuzen als auch mit den Trägerprofilabschnitten verschraubt werden. Stirnseitig zwischengelegte Dichtungen sollen die Dichtheit der Verbindungen sicherstellen. Um ein Verspannen der Trägerprofilabschnitte mit den Montagekreuzen zu erreichen wird nach der genannten Offenlegungsschrift vorgeschlagen, Excenter so einzusetzen, daß mit Hilfe dieser Excenter die Stirnflächen der Profilabschnitte gegen die Stirnflächen der Anschlußarme der Montagekreuze unter Zwischenfügung von Dichtmitteln angepreßt werden können.

Derartige Filterrahmen-Gitterwerke müssen nun über ihre eigene Last und die Last der eingesetzten Filterzellen hinaus Kräfte aufnehmen, die durch die an den Filterzellen infolge der Luftströmung entstehenden Druckdifferenz bedingt sind. Bei unterschiedlichem Betrieb (Tagbetrieb: Voller Luftstrom; Nachtbetrieb: Luftstrom abgeschaltet oder auf geringe Stufe zurückgeschaltet) wechseln diese Kräfte in verhältnismäßig rascher Folge, während durch die Staubeinlagerung ein stetiges Anwachsen der Druckdifferenz über längere Zeit hinweg erfolgt. Diese Veränderungen der Druckdifferenz führen zu Wechselbeanspruchungen, zu deren Abfangen die mit dem Excenter versehenen Verbindungsklötze sowohl mit den Armen der Montagekreuze und mit den Enden der Trägerprofile sicher verschraubt werden müssen, ein Umstand, der zu einem erheblichen Arbeitsaufwand bei der Montage führt.

Daraus leitet sich die der Erfindung zugrunde liegende Aufgabe ab, nach der ein gattungsgemäßes Filterrahmen-Gitterwerk so weitergebildet werden soll, daß Wechselbeanspruchungen aufgenommen werden können, wobei das Filterrahmen-Gitterwerk aus Einzelteilen in einfacher und wirtschaftlicher Weise montierbar sein soll und für die unterschiedlichen Betriebsweisen (Querströmung bzw. Fallströmung nach VDI 20 83) einsetzbar sein soll.

Diese Aufgabe wird nach der Erfindung dadurch gelöst, daß das Kastenprofil der Profilabschnitte mindestens eine stegartige Innenwand aufweist, daß die Frontseite jedes der Anschlußarme der Montagestücke im Bereich des fortgesetzten Außenprofils der Profilabschnitte mit einer den Hohlraum des Kastenprofils zumindest teilweise abdeckenden Stirnwand versehen ist und daß die Verbindungsmittel als die Stirnwand der Anschlußarme der Montagestücke hintergreifende und in der stegartigen Innenwand der Kastenprofile widergelagerte Zugelemente ausgebildet sind.

Die so ausgebildeten Montagestücke können einfach und doch sicher mit den entsprechenden Profilabschnitten verbunden werden, wobei das Verbindungselement als Zugelement Kraft-Übertragungsglied ist. Durch das Hintergreifen der die Frontöffnung des Anschlußarmes des Montagestücks zumindest teilweise verschließenden Stirnwand wird ein sicherer Kraftangriff auf dieser Seite ermöglicht. Die direkte Einleitung der Zugkraft in die Profilabschnitte durch die Widerlager erlaubt ein sicheres Anpressen.

Die stegartige Innenwand wird vorteilhaft als parallel zum Flansch ausgerichteter Quersteg ausgebildet, wobei die Oberkante der Stirnwand zumindest bis zur Oberkante der stegartigen Innenwand reicht. Eine andere Ausbildung geht dahin, daß die stegartige Innenwand als rechtwinklig zum Flansch ausgerichteter Steg ausgebildet ist, der sich vorzugsweise zwischen zwei im Inneren des Kastenprofils angeordneten, flanschparallelen Querstreben mittig zwischen diesen erstreckt. Beide Ausführungsformen lassen sich in einfacher Weise als Strangpreßprofile aus geeigneten Aluminiumlegierungen herstellen. Die Verwendung von Aluminium als Werkstoff verringert die vom Filterrahmen-Gitterwerk selbst gegebene Kraft; die Abhängung kann im allgemeinen leichter gehalten werden.

In einer Ausführungsform ist das Zugelement als Schraube ausgebildet, wobei de Schraubenkopf die mit einer Bohrung zur Durchführung des Schraubenschaftes versehene Stirnwand des Anschlußarmes des Montagestückes hintergreift und die stegartige Innenwand im Endbereich des Profilabschnittes mit einem das Gewinde des Schraubenschaftes aufnehmenden Mutterngewinde versehen ist. In dieser Ausführung wird eine Verbindung zwischen den Anschlußarmen der Montagestücke und den Profilabschnitten geschaffen, die vom Montagestück aus anziehbar ist. Eine übliche Schraubensicherung, etwa eine zwischen dem Schraubenkopf und der Innenfläche der Stirnwand eingelegte Sicherungsscheibe verhindert ein Lösen der Schraubverbindung, wobei durch die Ausführung der Schraube den gewünschten Festigkeitswerten oder den aufzunehmenden Kräften Rechnung getragen werden kann.

Eine Weiterbildung ist dadurch gegeben, daß ein die gesamte stegartige Innenwand durchlaufender, dem Kerndurchmesser der Schraube des Gewindes entsprechender Kanal vorgesehen ist, der in den Endbereichen des Profilabschnittes das Mutterngewinde aufweist. Dabei ist es vorteilhaft, daß die Höhe des Kanals und somit die Achse der Schraube in oder nahe bei der neutralen Faser des Profils des Profilabschnittes verläuft. Die dadurch gegebene Ausführungsform ist im Strangpreßverfahren in einfacher Weise herstellbar. Die Profilabschnitte können auf die gewünschte Länge abgelängt werden. Mit Hilfe dieser so vorteilhaft ausgebildeten Profile lassen sich daher in einfacher Weise Filterrahmen-Gitterwerke für beliebige Filterzellen-Abmessungen herstellen, wobei das Anbringen der endständigen Gewinde zusätzlich zum Ablängen die einzige Arbeit ist. Durch die Verlegung der Achse des Kanals bzw. der Schraube in oder nahe an die neutrale Faser des Profils der Profilabschnitte wird erreicht, daß die Schraubverbindung bei einem "Arbeiten" der Zuluftfilterwand bzw. Zuluftfilterdecke nicht (wesentlich) zusätzlich belastet wird.

Eine andere Ausführungsform ist dadurch gegeben, daß das Zugmittel als Spannhaken ausgebildet ist, dessen hakenförmig abgebogenes Ende die Stirnwand des Anschlußarmes des Montagestückes hintergreift und das mit einer durch eine Bohrung im gestreckten Ende geführten Andrückschraube anpreßbar ist, wobei das gestreckte Ende des Spannhakens Mittel zum Widerlagern an der stegartigen Innenwand aufweist. Weiter wird vorgeschlagen, daß die stegartige Innenwand eine Gewindebohrung aufweist, in die die Andrückschraube einschraubbar ist und eingeschraubt das Widerlager bildet. Alternativ dazu wird vorgeschlagen, daß die stegartige Innenwand eine Ausnehmung aufweist, die mit einer nahe dem freien Ende des gestreckten Schenkels des Spännhakens angeformten Vorsprung als Widerlager zusammenwirkt, wobei die Andrückschraube mit einer Gewindebohrung in der Stirnwand des Anschlußarmes des Montagestücks verschraubbar ist. Dabei können der angeformte Vorsprung als Leiste und die Ausnehmung als die Leiste aufnehmende Nut ausgebildet sein, oder der angeformte Vorsprung als bolzenartiger Stift und die Ausnehmung als den bolzenartigen Stift aufnehmendes Loch. Vorteilhaft ist es, wenn der angeformte Vorsprung durch Ausdrückung gebildet mit dem gestreckten Schenkel des Spannhakens einstückig verbunden ist. Bei dieser Ausführungsform ist das Zugglied ein die Stirnwand des Anschlußarm des Montagestücks hintergreifender Haken, dessen gestreckter Schenkel in einfacher Weise mit einer Andrückschraube mit der stegartigen Innenwand des Profilabschnitts verbunden ist, wobei die eingeschraubte Andrückschraube das Widerlager bildet. Um ein von der Verschraubung unabhängiges Widerlager zu erreichen wird der Spannhaken mit einem angeformten Vorsprung versehen, der mit einer entsprechenden Ausnehmung in der stegartigen Innenwand des Profilabschnittes als Widerlager zusammenwirkt. Es versteht sich von selbst, daß derartige Widerlager die unterschiedlichsten Formen haben können. Bewährt haben sich die Paarungen Leiste und Nut sowie bolzenartiger Stift und Loch. Dabei ist der bolzenartige Stift im Spannhaken und das Loch in der stegartigen Innenwand durch einfache Herstellmöglichkeit ausgezeichnet. Besonders der bolzenartige Stift läßt sich dabei durch Ausdrücken formen und bleibt dabei mit dem gestreckten Schenkel einstückig verbunden. Ein Lösen oder ein Verlieren gehen ist somit ausgeschlossen.

Eine vorteilhafte Weiterbildung ist dadurch gegeben, daß die hakenförmige Abwinklung des Spannhakens mit seinem gestreckten Schenkel einen Winkel geringfügig größer 90° bildet, wobei es vorteilhaft ist, daß der Winkel zwischen dem gestreckten Schenkel und der hakenförmigen Abwinklung im Bereich von 93° bis 96° liegt. In Zusammenhang damit ist es weiter vorteilhaft, daß die Innenwand der Stirnseite jedes der Anschlußarme der Montagestücke eine der Schräglage der hakenförmigen Abwinklung des Spannhakens entsprechende, von 90° abweisende Schräglage aufweist. Durch diese Ausbildung wird beim Anziehen der Andrückschraube des Spannhakens eine Keilwirkung erreicht, die die wirkenden Kräfte entsprechend verstärkt. Das Andrücken der Stirnflächen der Profilabschnitte und der Anschlußarme der Montagestücke wird dadurch begünstigt. In diesem Zusammenhang wird darauf hingewiesen, daß die Montagestücke sowohl für die Schraubbefestigung als auch für die Spannhakenbefestigung ausgebildet werden können, wenn die Stirnwand mit der den Schraubenschaft durchlassenden Bohrung versehen wird und wenn die Innenseite der Stirnwand die entsprechende Abschrägung aufweist. Zur Verbindung der Montagestücke mit den Profilabschnitten mittels einer Schraube wird dann ein der Abschrägung entsprechendes Paßstück eingesetzt, das ein einwandfreies Hintergreifen der Stirnwand durch den Schraubenkopf sicherstellt. Dieses der Abschrägung entsprechendes Einsatzstück kann dabei besonders auch zur Aufnahme einer Schraubensicherung hergerichtet sein.

Eine montagefreundliche Weiterbildung ist dadurch gegeben, daß die Stirnwand jedes der Anschlußarme des Montagestückes mindestens eine Nase aufweist, die in den Hohlraum des Endbereiches des zugeordneten Kastenprofils jedes der Profilabschnitte einführbar ist. Eine Weiterbildung ist dadurch gegeben, daß als Nasen ein Paar Leisten vorgesehen ist, deren Außenseiten an den Innenseiten zweier einander gegenüberliegender Wände des Kastenprofils formschlüssig anlegbar sind . Darüber hinaus wird vorgeschlagen, daß die Länge der das Paar bildenden Leisten der Höhe des Hohlraums in den die Leisten einführbar sind entspricht. Durch die Nase/Nasen wird bei der Montage die Möglichkeit eines "Anschnäbelns" gegeben, so daß die Profilabschnitte und die Anschlußarme der Montagestücke in einfacher Weise zusammensetzbar sind. Werden die Nasen zu Leisten umgeformt, deren Außenseiten einen gewissen Formschluß mit den Innenseiten zweier einander gegenüberliegender Wände eines Hohlraums des Kastenprofils herstellen, wird quasi ein Steck-System erhalten, besonders dann, wenn die Höhen der Leisten auf die Höhen der Hohlräume in die die Leisten eingeführt werden abgestimmt sind. Die zusammengesteckten Einzelteile lassen sich dann in einfacher Weise sowohl mit der Schraubverbindung als auch mit der Spannhakenverbindung gegeneinander verriegeln, wobei selbstverständlich Dichtungen als ausgestanzte Dichtungsteile oder als aufgestrichene, später aushärtende Flüssigdichtungen zwischengefügt werden.

Das Wesen der Neuerung wird anhand der Fig. 1 bis 6 beispielhaft näher erläutert. Dabei zeigen:

Fig. 1    einen Ausschnitt eines Filterrahmen-Gitterwerks (Ecke)

Fig. 2    Aufsicht auf ein
Montagestück mit zwei Armen (Fig. 2a)
Montagestück mit drei Armen (Fig. 2b)
Montagestück mit vier Armen (Fig. 2c)

Fig. 3    vierarmiges Montagekreuz halbgeschnitten (Schnitt entsprechend III-III Fig. 2c)

Fig. 4    Querschnitt eines Profilabschnitts eingerichtet zur Spannschraubenbefestigung (4a,4b zwei verschiedene Querschnittsformen)

Fig.5    Querschnitt eines Profilabschnitts eingerichtet zur Spannhakenbefestigung

Fig. 6    Schnitt durch Spannverbindung des Profilabschnitts mit dem Verbindungsarm
durch Spannschraube        Fig. 6a
durch Spannhaken            Fig. 6b

Fig. 7    perspektivische Schema-Darstellung der Spannverbindung mit Spannschraube

Fig. 8    perspektivische Schema-Darstellung der Spannverbindung mit Spannhaken (teilgeschnitten).

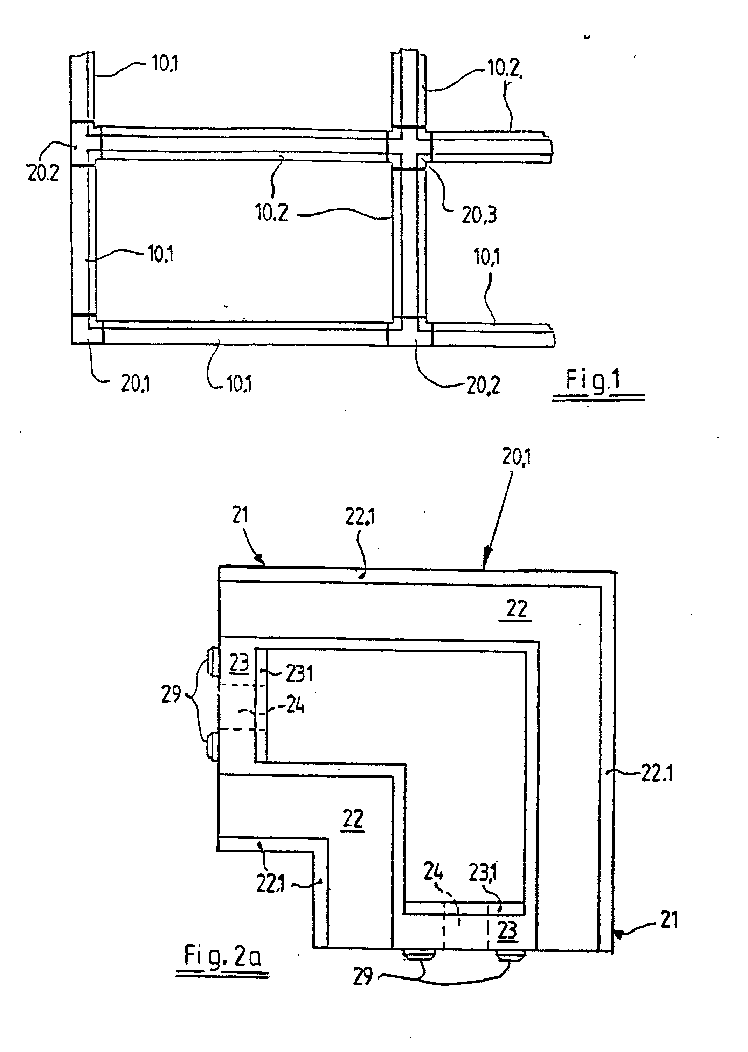

Die Fig. 1 zeigt einen Eckausschnitt eines derartigen Filterrahmen-Gitterwerks gebildet aus Profilabschnitten 10.1 und 10.2, die mittels der Montagestücke 20.1, 20.2 und 20.3 miteinander verbunden sind. Die Profilabschnitte 10.1 weisen dabei nur einen einseitig angeformten Flansch, die Profilabschnitte 2 einen zweiseitig angeformten Flansch auf. Die Profilabschnitte 10.1 sind daher für die das Filterrahmen-Gitterwerk seitlich begrenzenden Abschnitte vorgesehen, wobei der einseitig angeformte Flansch immer zum Inneren des Gitterwerks hin ausgerichtet ist. Die Profilabschnitte 10.2, die beidseits angeformte Flansche aufweisen, trennen jeweils zwei Filterelemente im Inneren des Filterrahmen-Gitterwerks. Durch diese Flanschanordnung können die äußeren Profilabschnitte 10.1 wandbündig montiert sein und jede Filterzellenaufnahme weist die zur Dichtung notwendigen Flanschabschnitte auf, die sich in den Montagestücken 20.1, 20.2 und 20.3 fortsetzen. Entsprechend dem Aufbau des Filterrahmen-Gitterwerks werden eckständige Montagestücke mit zwei Anschlußarmen 20.1, randständige Montagestücke mit drei Anschlußarmen 20.2 und schließlich innere Montagestücke 20.3 benötigt, die kreuzförmig ausgebildet sind,

Diese Montagestücke weisen im Bereich der Arme eine Forsetzung des Profilabschnitt-Flansches auf, wobei die Flanschausbildung derjenigen entspricht, die die Profilabschnitte selbst aufweisen. Zwischen den Stirnflächen der Profilabschnitte 10.1 bzw. 10.2 und den Stirnflächen der Anschlußarme der Montagestücke 20.1, 20.2 und 20.3 sind Dichtungen angeordnet, die beispielsweise als dem Profil angepaßte Stanzformlinge zwischengelegt und mittels der Spannelemente festgezogen werden, die aber auch als streichfähige Dichtmasse auf eine oder beide Stirnflächen aufgebracht, diese miteinander verbinden, wobei die Dichtmasse eine elastische Schicht bildet, die auch durch Polymerisation oder andere Arten der Aushärtung entstanden sein kann.

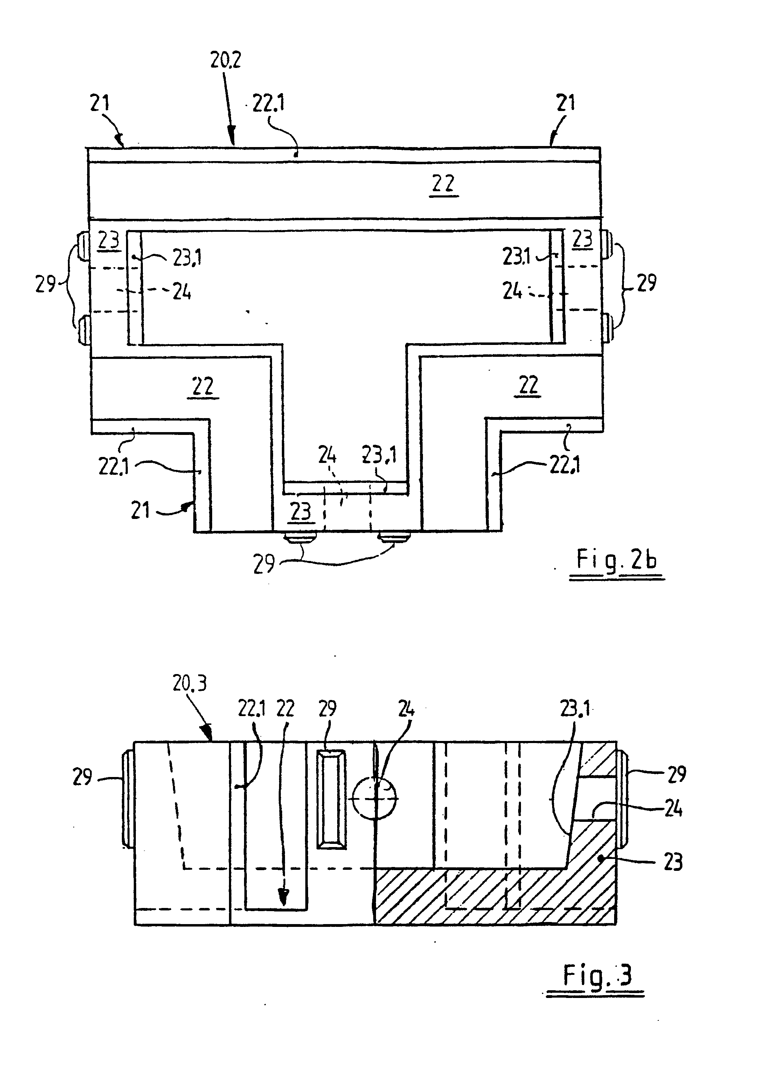

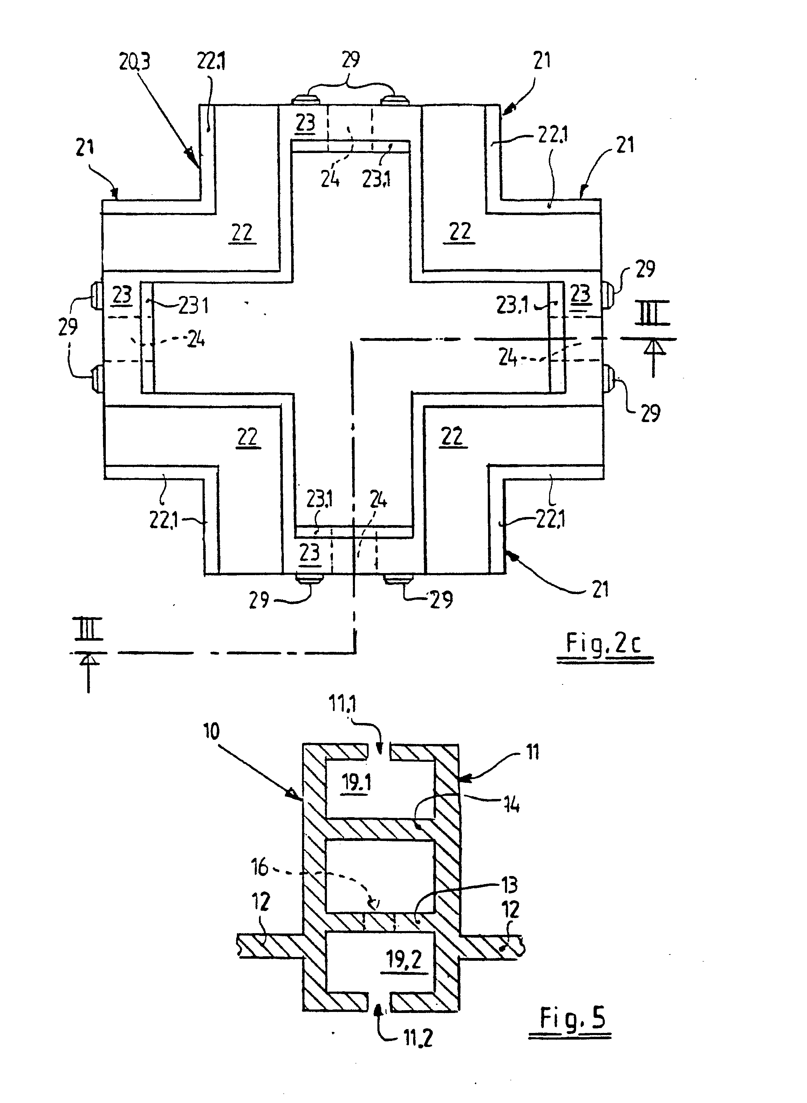

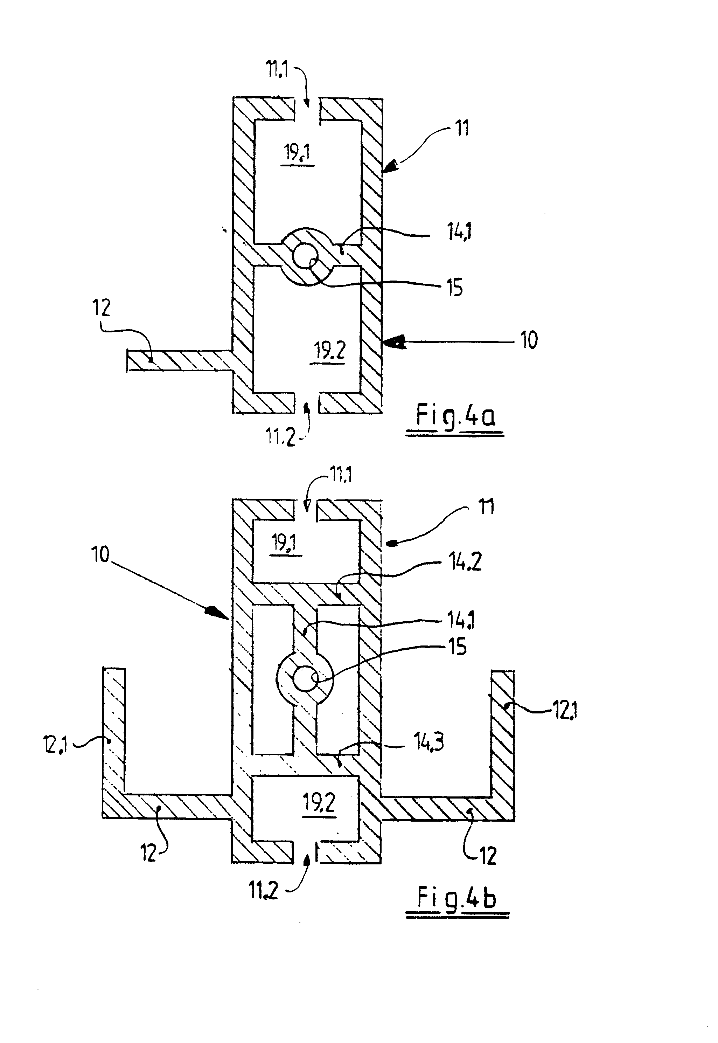

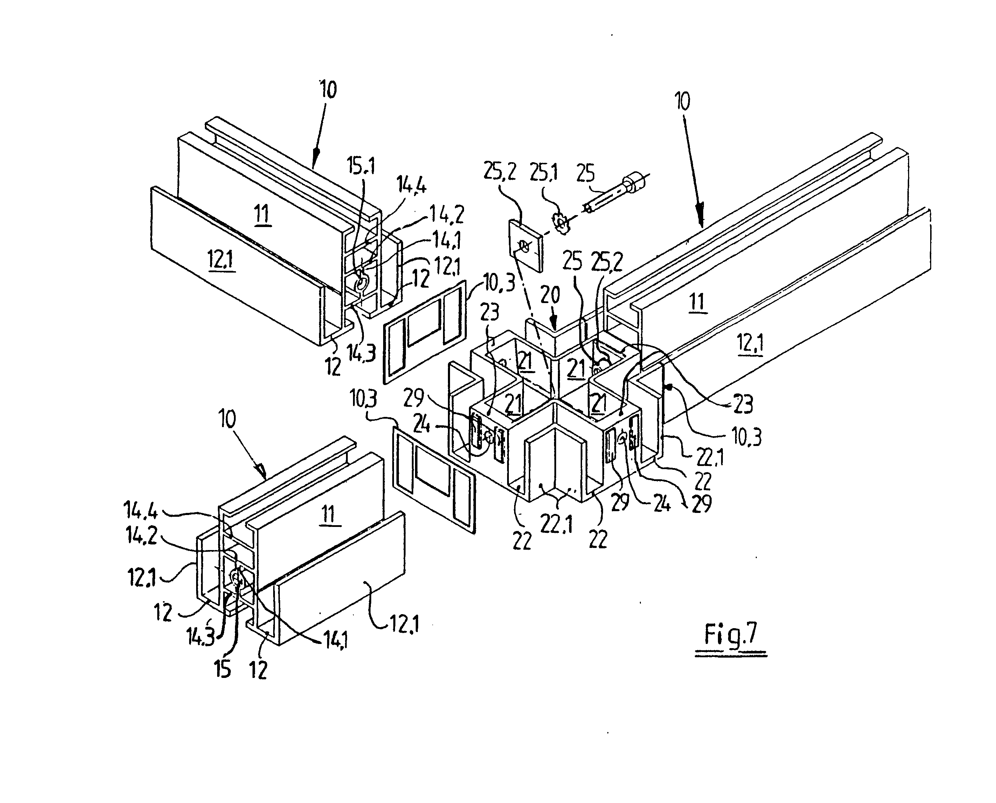

Die Fig. 2a, 2b und 2c zeigen die zweiarmigen, dreiarmigen und vierarmigen Montagestück nochmals im einzelnen. Das zweiarmige Montagestück 20.1, das dreiarmige Montagestück 20.2 und das vierarmige Montagestück 20.3 weisen jeweils zwei, drei oder vier Anschlußarme 21 auf, in deren Bereich sich der Flansch 12 (Fig. 7) der Profilabschnitte als Flansch 22 fortsetzt. Alle drei Montagestücke sind dargestellt für einen nutartig ausgebildeten Dichtflansch zur Aufnahme einer zähflüssigen, schmelz- oder aushärtbaren Dichtmassse, in die (eine nicht näher dargestellte) Stegkante an der Filterzelle abdichtend eingesetzt wird. Dazu sind die rechtwinklig zum Flansch 12 der Profilabschnitte 10 ausgerichteten Seitenwände 12.1 als Seitenwände 22.1 fortgesetzt. Die Stirnflächen der Anschlußarme 21 sind durch Querwände 23 verschlossen, deren Außenseiten leistenartige Nasen 29 aufweisen, die formschlüssig in Hohlräume der Profilabschnitte einführbar sind. Die dargestellten Montagestücke 20.1, 20.2 und 20.3 sind eingerichtet zum Anschluß an Profilabschnitte sowohl mittels des Spannelementes "Schraube" als auch des Spannelementes "Spannhaken". Dazu ist die nach innen gewandte Seite der Stirnwände 23 mit der Abschrägung 23.1 versehen, die darüber hinaus ein gestrichelt angedeutetes Loch zum Durchführen der Spannschraube aufweist. Beim Verspannen von Profilabschnitten und Montagestücken mit Hilfe der Spannschraube ist ein Einsatzstück notwendig, das das saubere Hintergreifen der Innenseite der Stirnwand 23 durch den Schraubenkopf ermöglicht und das dementsprechend der Abschrägung 23.1 angepaßt ist. Die Fig. 3 zeigt ein vierarmiges Montagekreuz 20.3 halbgeschnitten, entsprechend der Schnittlinie III-III. Hier ist die geschnittene Stirnwand 23 mit ihrer Abschrägung 23.1 deutlich zu erkennen, wobei der Winkel der Abschrägung im Bereich von 3° bis 6° liegt. Darüber hinaus ist auch das für die Spannschraube vorgesehene Loch 24 zu erkennen, das sowohl im geschnittenen Teil, als auch in den beiden rechtwinklig zur Zeichenebene stehenden Anschlußarme erkennbar und im nicht geschnittenen Anschlußarm durch seine Mittellinie angedeutet ist.

Die Fig. 4a und 4b zeigen die Grundformen der QuerschnittsProfile der Profilabschnitte 10, die in der dargestellten Ausführungsform für den Anschluß durch Spannschrauben eingerichtet sind. Im einfachsten Fall ist das kastenprofilartige Stück 11 mit einer als Steg ausgebildeten inneren Querwand 14.1 versehen, die das Kastenprofil 11 in zwei Hohlräume 19.1 und 19.2 unterteilt. Durch die Ausführung des Steges ist gewährleistet, daß die Räume 19.1 und 19.2 luftdicht voneinander getrennt sind. Die stegartige Innenwand 14.1 ist zumindest im Bereich der Enden der Profilabschnitte mit einer Bohrung 15 versehen, in die das Gewinde für die Spannschrauben eingeschnitten ist. Bei stranggepreßten Aluminiumprofilen ist es vorteilhaft die Bohrung 15 als längsdurchlaufenden Kanal auszubilden. Die Schmalwände des Kastenprofils 11 sind mit Schlitzen 11.1 und 11.2 versehen, wobei der eine der Schlitze 11.1 auf der Zuluftseite und der andere 11.2 auf der Luftaustrittsseite angeordnet ist. Die zuluftseitigen Schlitze 11.1 dienen dabei im allgemeinen zum Einführen von Befestigungselementen, insbesondere bei Ausbildung des Filterrahmen-Gitterwerks als Zuluft-Filterdecke zur Aufnahme der Hängeeisen, da diese Decken in aller Regel abgehängt werden. Die auf der Luftaustrittsseite angeordneten Schlitze 11.2 können zum Anbringen von Beleuchtungskörpern oder Versorgungsampeln o.dgl. verwandt werden, wobei die notwendigen Versorgungsleitungen zweckmäßigerweise durch die Mitten der Verbindungsstücke 20 geführt werden, deren Öffnungen in einfacher Weise mit Kunststoffkappen verschließbar sind und in denen die durchgeführten Versorgungsleitungen abgedichtet werden. Die Fig. 4b zeigt eine Weiterbildung des Profils, wobei die stegartige Innenwand 14.1 mit den durchlaufendem Kanal 15 zwischen zwei Stegen 14.2 und 14.3 und rechtwinklig dazu so verläuft, daß sich der Kanal 15 in der Mittelachse befindet. Durch diese Ausbildung wird eine bessere Stabilität des Kastenprofils 11 erreicht. Die zur Zuströmseite bzw. zur Luftabströmseite offenen Räume 19.1 und 19.2 des Kastenprofils werden dabei verkleinert, ohne ihre Funktion zu verlieren. Seitlich an die Kastenprofile 11 sind die Flansche 12 angeformt, die im Fall des in Fig. 4a dargestellten Kastenprofils als einseitiger einfacher Flansch und im Fall des in Fig. 4b dargestellten Kastenprofils als beidseitig nutförmig ausgebildeter Flansch dargestellt sind. Es versteht sich von selbst, daß auch die einseitigen Flansche nutförmig bzw.die doppelseitigen Flansche einfach ausgebildet sein können. Zur Bildung der Nut sind die abstehenden Flanschteil 12 mit rechtwinklig dazu ausgerichteten Seitenwänden 12.1 versehen, wobei die Nut die - nicht näher dargestellte - Dichtmasse aufnimmt.

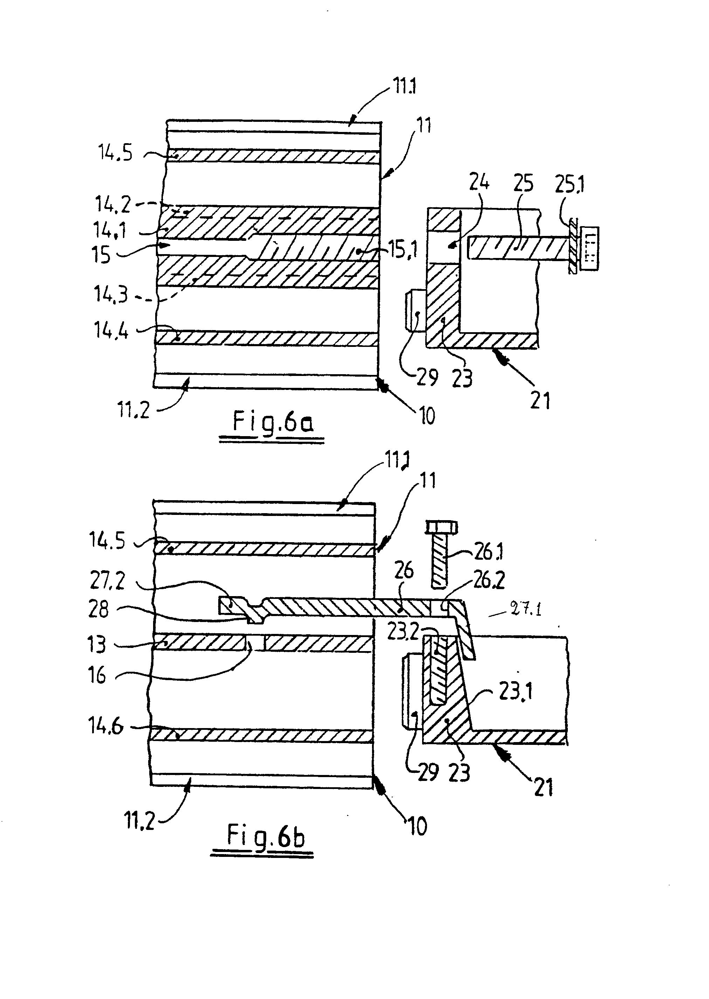

Die Fig. 5 zeigt den Querschnitt eines zur Befestigung mit Spannhaken eingerichteten Profilabschnittes 10 mit dem Kastenprofil 11 sowie den (angedeuteten) Flanschansätzen 12. Die Schmalseiten des Kastenprofils 11 sind geschlitzt dargestellt, wobei die Schlitze 11.1 und 11.2 das Einführen von Befestigungsköpfen in die Hohlräume 19.1 bzw. 19.2 ermöglichen. Mit Hilfe dieser eingeführten Befestigungsköpfe können die Profile einerseits in eine abgehängte Deckenkonstruktion eingefügt werden, wobei die Hängeköpfe Bestandteile der Hängeeisen sind und andererseits können auf der gegenüberliegenden Seite Versorgungsampeln oder Beleuchtungseinrichtungen o.dgl. in einfacher Weise befestigt werden. Im Inneren ist das Profil stegartig unterteilt durch die Querwände 13 und 14, wobei die Querwand 13 mit einem das Widerlager für den Spannhaken bildenden Loch 16 versehen ist. Es versteht sich dabei von selbst, daß nicht allein ein Loch als Form des Widerlagers möglich ist, sondern daß Leisten, Nuten o.dgl. zusammen mit den entsprechend ausgebildeten Hintergreifungsorganen am Spannhaken gleiche Dienste leisten.

Die Figuren 6a und 6b zeigen in Art einer Explosionsdarstellung die Anschlußmöglichkeiten, wobei die Fig. 6a den Anschluß mit einer Spannschraube und die Fig. 6b den Anschluß mit einem Spannhaken darstellt. Das Anschlußende des Profilabschnittes 10 wird mit dem Anschlußarm 21 des Montagestückes verbunden, wobei der Querschnitt des im Längsschnitt dargestellten Kammerprofils 11 im wesentlichen durch die Querwände 14.4 und 14.5 zusammen mit den aufragenden Wänden gebildet wird. Die aufragenden Wände stehen dabei über und bilden mit den rechtwinklig dazu stehenden Wandteilen die Schlitze 11.1 und 11.2. Um die Verbindung mittels der Spannschraube 25 zu ermöglichen, ist im Inneren des Profilabschnittes eine innere Wand 14.1 vorgesehen, die sich zwischen den beiden stegartigen Querwänden 14.2 und 14.3 erstreckt. In dieser Wand befindet sich ein längsverlaufender Kanal 15, der im Bereich der Endung zu einer Gewindebohrung 15.1 umgeformt ist. Das freie Ende des Anschlußarmes 21 greift mit seiner überstehenden Nase 29 etwa formschlüssig in den freien Raum zwischen der Querwand 14.3. und 14.4 ein, wobei das stirnseitige Ende des Anschlußarmes durch die Stirnwand 23 verschlossen ist. In der Stirnwand 23 befindet sich die Bohrung 24, durch die die Spannschraube 25 geführt und in das Gewinde der Gewindebohrung 15.1 eingeschraubt wird. Ein Sicherungsring 25.1 verhindert nach Anziehen der Spannschraube 25 ein ungewolltes Lösen dieser Spannschraube. Es versteht sich von selbst, daß bei dieser Art des Verbindens das Verbindungsstück so geformt sein muß, daß die Spannschraube 25 gefaßt und angezogen werden kann. Eine Möglichkeit wird darin gesehen, den Schraubenkopf mit einem Innensechskant zu versehen und den Innensechskant über eine biegsame Welle anzuschrauben. Das zur Spannhakenbefestigung vorgesehene Profil unterscheidet sich von dem zur Spannschraubenbefestigung vorbereiteten Profil durch das Fehlen der stegartigen Innenwand 14.1. Bei der in Fig. 6b dargestellten Ausführungsform ist eine stegartige Querwand 13 vorgesehen, in der ein als Widerlager dienendes Loch 16 die Ausdrückung 28 am Spannhaken 26 aufnimmt. Der Spannhaken 26 wird dabei von einem Flachprofil gebildet, das mit einer hakenförmigen Abwinklung 27.1 versehen ist und dessen gestrecktes Ende 27.2 nahe seinem hinteren Ende die als Widerlager dienende Ausdrückung 28 aufweist. Nahe der Abwinklung ist eine Bohrung 26.2 vorgesehen, durch die die Befestigungsschraube 26.1 geführt ist, die in der Gewindebohrung 23.2 der Stirnwand 23 des Anschlußarmes 21 verschraubt wird. Durch eine der Abschrägung 23.1 der Innenseite der Stirnwand 23 des Anschlußarmes 21 angepaßte Abwinklung des abgewinkelten Schenkels 27.1 des Spannhakens 26 wird erreicht, daß ein Aufgleiten auf einer schrägen Ebene erfolgt, wodurch die Spannkräfte erheblich vergrößert werden.

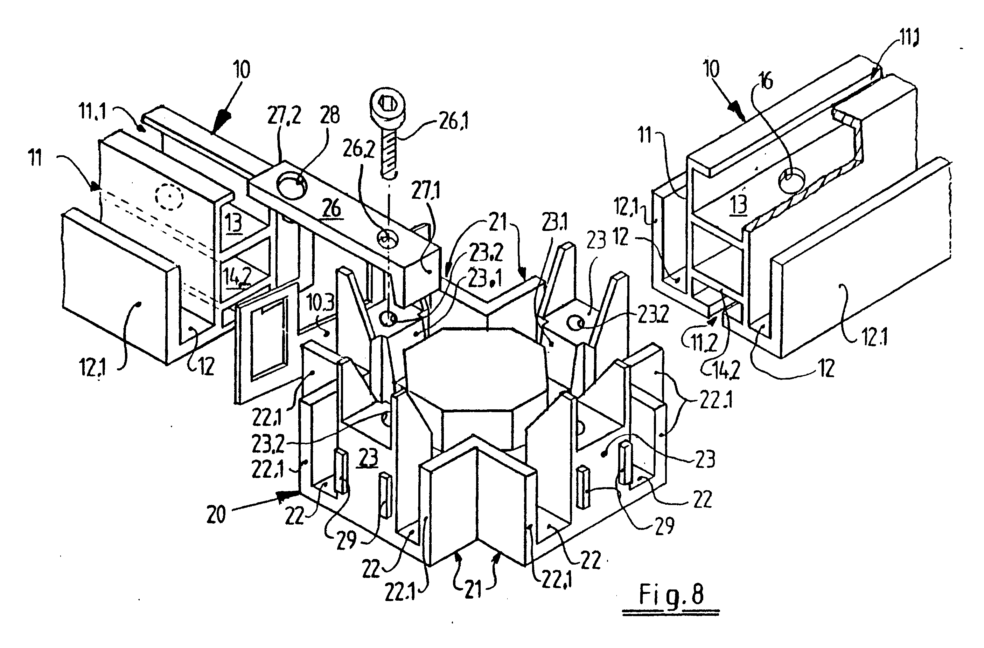

Schließlich zeigen die Fig. 7 und 8 in einer perspektivischen Darstellung die Trägerprofilbefestigung mit Spannschrauben (Fig. 7) bzw. mit Spannhaken (Fig. 8), wobei zur besseren Verdeutlichung teilweise Explosions-Darstellungweise und teilweise geschnittene Darstellungsweise gewählt wurden. In der Fig. 7 ist ein vierarmiges Montagestück 20 dargestellt, von dessen Anschlußarmen 21 zunächst einer mit einem Trägerprofil 10 versehen ist. Bei zwei weiteren sind die Trägerprofile 10 zur Montage vorbereitet. Jedes der Trägerprofile besteht aus einem Kastenprofil ähnlichen Körper 11 mit seitlichen Flanschen 12, die durch angeformte Seitenwände 12.1 zu Nuten ausgebildet sind. Im Inneren jedes der Kastenprofile 11 ist eine stegartige Innenwand 14.1 mit einem im Endbereich zu einer Gewindebohrung 15.1 umgeformten durchgehenden Kanal 15 versehen, wobei sich die stegartige Innenwand 14.1 zwischen zwei stegartigen Querwänden 14.2 und 14.3 erstreckt. Weitere Querwände - 14.4 - können vorgesehen sein Die Schmalseiten des Kastenprofils 11 sind - in der bereits mehrfach beschriebenen Art - als geschlitzte Seitenwände ausgebildet, um die Profile selbst befestigen zu können und um an den Profilen Befestigungsmöglichkeiten zu haben. Die Stirnflächen der Profilabschnitte 10 werden gegen die Stirnflächen der Anschlußarme 21 des Montagestücks 20 unter Zwischenfügung von Formdichtungen 10.3 angefügt, wobei die vorstehenden Nasen 29 formschlüssig in die Hohlräume des Kastenprofils eingreifen und die Dichtungen 10.3 so lange halten, bis die Anpreßkräfte dies übernehmen. Mit Hilfe der Schrauben 25, die durch die Bohrungen 24 in den Stirnwänden 23 geführt und in die Gewinde der Gewindebohrungen 15.1 eingeschraubt werden, werden die Profilabschnitte 10 gegen die Anschlußarme des Montagestückes gepreßt. Zwischengefügte keilförmige Einlagen 25.2 gewährleisten trotz der Abschrägung 23.1 der Innenseiten der Stirnwände 23 ein einwandfreies Anliegen des Schraubenkopfes, wobei zwischengefügte Zahnscheiben 25.1 ein Lösen verhindern. Das Außenprofil der Profilabschnitte 10 ist als Nutprofil ausgebildet, wobei die Flanschen 12 sich in den Flanschabschnitten 22 und die dazu rechtwinklig stehenden Seitenwände 12.1 in den rechtwinklig stehenden Seitenwänden 22.1 fortsetzten. Bei der in Fig. 8 dargestellten Spannhakenbefestigung sind die vier Arme 21 des Montagestückes 20 noch nicht belegt. Das eine der eingezeichneten Trägerprofile 10 ist zur Befestigung vorbereitet, wozu der Spannhaken 26 mit seinem abgewinkelten Ende 27.1 über die Innenfläche der Stirnwand 23 geschoben und mit seinem gestreckten Ende 27.2 in den der Querwand 13 mit dem Widerlager 16 zugeordneten Hohlraum des Kammerprofils 11 eingeführt wird. Nach Festlegen der bolzenartigen Ausdrückung 28 im Widerlager 16 wird die Anpreßschraube 26.1 (Fig. 6b) durch das Loch 26.2 im Spannhaken 26 geführt und in die Gewindebohrung 23.2 in der Stirnwand 23 so eingeschraubt, daß der Spannhaken das Trägerprofil an den Anschlußarm des Montagestückes anzieht. Dieses Anziehen wird durch die Abschrägung 23.1 (Fig. 6b) der Innenseite der Stirnwand 23 jedes der Anschlußarme 21 des Montagestückes 20 erreicht. Eine dementsprechende Abschrägung des abgewinkelten Endes 27.1 des Montagehakens erleichtert das Zusammenwirken. Bei dieser Art der Verbindung kann das Montagestück - wie in Fig. 8 dargestellt - besonders einfach zur Durchführung von Versorgungsleitungen o.dgl. hergerichtet sein, wobei im Zentrum des Montagestückes 20 vorhandene Öffnungen in einfacher Weise mit einer Kunststoffkappe verschlossen werden können.

**Patentansprüche**

1. Filterrahmen - Gitterwerk zum Bestücken mit Luftfilterzellen, insbesondere für Zuluftfilterwände oder Zuluftfilterdecken Reiner Räume, bestehend aus zwei-, drei- oder vierarmigen Montagestücken (20) und die Montagestücke verbindende Profilabschnitte (10), wobei jeder Profilabschnitt im wesentlichen aus einem längsverlaufenden Kastenprofil (11) an das mindestens einseitig, ein das Auflager der Luftfilterzellen bildender Flansch (12) angeformt ist, gebildet ist, wobei die Arme der Montagestücke (20) als Anschlußarme für die Profilabschnitte (10) zumindest deren Außenprofil im Bereich der angeformten Flanschen fortsetzen und wobei die einander zugewandten Stirnflächen jeder der Profilabschnitte und der ihnen zugeordneten Anschlußarme der Montagestücke als Paßflächen ausgebildet und mittels Verbindungsmittel unter Zwischenfügung von Dichtungen gegeneinander preßbar sind, **dadurch gekennzeichnet, daß** das Kastenprofil (11) der Profilabschnitte (10) mindestens eine stegartige Innenwand (14.1) aufweist, daß die Frontseite jeder der Anschlußarme (21) der Montagestücke (20) im Bereich des fortgesetzten Außenprofils der Profilabschnitte (10) mit einer dem Hohlraum des Kastenprofils (11) zumindest teilweise abdeckenden Stirnwand (23) versehen ist und daß die Verbindungsmittel als die Stirnwand (23) der Anschlußarme (21) der Montagestücke (20) hintergreifende und in der · stegartigen Innenwand (14.1) der Kastenprofile (11) widergelagerte Zugelemente ausgebildet sind.

2. Filterrahmen-Gitterwerk nach Anspruch 1, **dadurch gekennzeichnet, daß** die stegartige Innenwand (14.1) als parallel zum Flansch (12) ausgerichteter Quersteg ausgebildet ist, wobei die Oberkante der Stirnwand (23) mindestens bis zur Oberkante der stegartigen Innenwand (14.1) reicht.

3. Filterrahmen-Gitterwerk nach Anspruch 1, **dadurch gekennzeichnet, daß** die stegartige Innenwand (14.1) als rechtwinklig zum Flansch (12) ausgerichteter Steg ausgebildet ist, der sich vorzugsweise zwischen zwei im Inneren des Kastenprofils (11) angeordneten flanschparallelen Querstegen (14.2, 14.3) und mittig zwischen diesen erstreckt.

4. Filterrahmen-Gitterwerk nach Anspruch 2 oder 3, **dadurch gekennzeichnet, daß** das Zugelement als Schraube (25) ausgebildet ist, wobei der Schraubenkopf die mit einer Bohrung (24) zur Durchführung des Schraubenschaftes versehene Stirnwand (23) des Anschlußarmes (21) des Montagestückes (20) hintergreift und die stegartige Innenwand (14.1) im Endbereich des Profilabschnittes (10) mit einem das Gewinde des Schraubenschaftes aufnehmenden Muttergewinde (15) versehen ist.

5. Filterrahmen-Gitterwerk nach Anspruch 4, **dadurch gekennzeichnet**, daß ein die gesamte stegartige Innenwand (14.1) durchlaufender, dem Kerndurchmesser des Gewindes der Schraube (25) entsprechender Kanal vorgesehen ist, der in den Endbereichen des Profilabschnittes (10) das Muttergewinde (15) aufweist.

6. Filterrahmen-Gitterwerk nach einem der Ansprüche 4 oder 5, **dadurch gekennzeichnet**, daß die Achse der Schraube (25) in oder nahe bei der neutralen Phaser des Profils des Profilabschnittes (10) verläuft.

7. Filterrahmen-Gitterwerk nach Anspruch 2, **dadurch gekennzeichnet**, daß das Zugmittel als Spannhaken (26) ausgebildet ist, dessen hakenförmig abgebogenes Ende (27.1) die Stirnwand (23) des Anschlußarmes (21) des Montagestückes (20) hintergreift und daß mit einer durch eine Bohrung (27.3) im gestreckten Ende (27.2) geführten Andrückschraube (17) anpreßbar ist wobei das gestreckte Ende (27.2) des Sperrhakens (26) Mittel zum Widerlagern an der stegartigen Innenwand (14.1) aufweist.

8. Filterrahmen-Gitterwerk nach Anspruch 7, **dadurch gekennzeichnet**, daß die stegartige Innenwand (14.1) eine Gewindebohrung aufweist, in die die Andrückschraube (17) einschraubbar ist und eingeschraubt das Widerlager bildet.

9. Filterrahmen-Gitterwerk nach Anspruch 7, **dadurch gekennzeichnet**, daß die stegartige Innenwand (14.1) eine Ausnehmung (19) aufweist, die mit einer nahe dem freien Ende des gestreckten Endes (27.2) des Spannhakens (26) angeformten Vorsprung (28) als Widerlager zusammenwirkt, wobei die Andrückschraube (17) mit einer Gewindebohrung in der Stirnwand (23) des Anschlußarmes (21) des Montagestückes (20) verschraubbar ist.

10. Filterrahmen-Gitterwerk nach Anspruch 9, **dadurch gekennzeichnet**, daß der angeformte Vorsprung (28) als Leiste und die Ausnehmung (19) als die Leiste aufnehmende Nut ausgebildet sind.

11. Filterrahmen-Gitterwerk nach Anspruch 9, **dadurch gekennzeichnet**, daß der angeformte Vorsprung (28) als bolzenartiger Stift und die Ausnehmung (19) als den bolzenartigen Stift aufnehmendes Loch ausgebildet sind.

12. Filterrahmen-Gitterwerk nach einem der Ansprüche 10 oder 11, **dadurch gekennzeichnet**, daß der angeformte Vorsprung (28) durch Ausdrückung gebildet mit dem gestreckten Schenkel (27.2) des Spannhakens (26) einstückig verbunden ist.

13. Filterrahmen-Gitterwerk nach einem der Ansprüche 7 bis 12, **dadurch gekennzeichnet**, daß die hakenförmige Abwinklung (27.1) des Sperrhakens (26) mit seinem gestreckten Schenkel (27.2) einen Winkel geringfügig größer 90° bildet.

14. Filterrahmen-Gitterwerk nach Anspruch 13, **dadurch gekennzeichnet**, daß der Winkel zwischen dem gestreckten Schenkel (27.2) und der hakenförmigen Abwinklung (27.1) im Bereich von 93° bis 96° liegt.

15. Filterrahmen-Gitterwerk nach Anspruch 13 oder 14, **dadurch gekennzeichnet**, daß die Innenseite der Stirnwand (23) jedes der Anschlußarme (21) der Montagestücke (20) eine der Schräglage der hakenförmigen Abwinklung (27.1) des Spannhakens (26) entsprechende, von 90° abweichende Schräglage aufweist.

16. Filterrahmen-Gitterwerk nach einem der Ansprüche 1 bis 15, **dadurch gekennzeichnet**, daß die Stirnwand (23) jedes der Anschlußarme (21) der Montagestücke (20) mindestens eine Nase (19) aufweist, die in den Hohlraum des Endbereichs des zugeordneten Kastenprofils (11) jedes der Profilabschnitte (10) einführbar ist.

17. Filterrahmen-Gitterwerk nach Anspruch 16, **dadurch gekennzeichnet**, daß als Nasen (29) ein Paar Leisten vorgesehen ist, deren Außenseiten an den Innenseiten zweier einander gegenüberliegender Wände des Kastenprofils (11) formschlüssig anlegbar sind.

18. Filterrahmen-Gitterwerk nach Anspruch 17, **dadurch gekennzeichnet**, daß die Länge der das Paar bildenden Leisten der Höhe des Hohlraums in den die Leisten einführbar sind entspricht.

## Claims

1. A filter-frame latticework for equipping with air filter cells, in particular for supply-air filter walls or supply-air filter ceilings of clean rooms, comprising two-, three- or four-armed assembly pieces (20) and profile portions (10) connecting the assembly pieces, each profile portion essentially being formed by a longitudinally extending box profile (11), on at least one side of which a flange (12) forming the support of the air filter cells is formed, the arms of the assembly pieces (20), as connection arms for the profile portions (10), continuing at least the outer profile of the latter in the region of the formed flanges and the mutually facing end faces of each of the profile portions and of the assembly-piece connection arms associated with them being designed as mating surfaces and being capable of being pressed against one another by means of connecting means with the interposition of seals, characterised in that the box profile (11) of the profile portions (10) has at least one web-like inner wall (14.1), in that the front side of each of the connection arms (21) of the assembly pieces (20) is provided in the region of the continued outer profile of the profile portions (10) with an end wall (23) at least partially covering the cavity of the box profile (11) and in that the connecting means are designed as tension elements engaging behind the end wall (23) of the connection arms (21) of the assembly pieces (20) and provided with abutment in the web-like inner wall (14.1) of the box profiles (11).

2. A filter-frame latticework according to claim 1, characterised in that the web-like inner wall (14.1) is designed as a transverse web oriented parallel to the flange (12), the upper edge of the end wall (23) extending at least as far as the upper edge of the web-like inner wall (14.1).

3. A filter-frame latticework according to claim 1, characterised in that the web-like inner wall (14.1) is designed as a web which is oriented at right angles to the flange (12) and preferably extends between two flange-parallel transverse webs (14.2, 14.3) arranged in the interior of the box profile (11), and preferably between said transverse webs.

4. A filter-frame latticework according to claim 2 or 3, characterised in that the tension element is designed as a screw (25), the head of the screw engaging behind the end wall (23) of the connection arm (21) of the assembly piece (20), said end wall being provided with a hole (24) for passing through the screw shank, and the web-like inner wall (14.1) being provided in the end region of the profile portion (10) with a female thread (15) receiving the thread of the screw shank.

5. A filter-frame latticework according to claim 4, characterised in that a channel which traverses the entire web-like inner wall (14.1), corresponds to the core diameter of the thread of the screw (25) and has the female thread (15) in the end regions of the profile portion (10) is provided.

6. A filter-frame latticework according to claim 4 or 5, characterised in that the axis of the screw (25) extends in or near the neutral axis of the profile of the profile portion (10).

7. A filter-frame latticework according to claim 2, characterised in that the tension means is designed as a clamping hook (26), the end (27.1) of which, which is bent in the shape of a hook, engages behind the end wall (23) of the connection arm (21) of the assembly piece (20) and that can be pressed on with a pressure screw (17) passed through a hole (27.3) in the elongated end (27.2), the elongated end (27.2) of the locking hook (26) having means for abutment on the web-like inner wall (14.1).

8. A filter-frame latticework according to claim 7, characterised in that the web-like inner wall (14.1) has a threaded hole into which the pressure screw (17) can be screwed and, having been screwed in, forms the abutment.

9. A filter-frame latticework according to claim 7, characterised in that the web-like inner wall (14.1) has a recess (19) which cooperates with a projection (28) as abutment, formed near to the free end of the elongated end (27.2) of the clamping hook (26), it being possible to screw the pressure screw (17) into a threaded hole in the end wall (23) of the connection arm (21) of the assembly piece (20).

10. A filter-frame latticework according to claim 9, characterised in that the formed projection (28) is designed as a strip and the recess (19) is designed as a groove which receives the strip.

11. A filter-frame latticework according to claim 9, characterised in that the formed projection (28) is designed as a bolt-like pin and the recess (19) is designed as a hole which receives the bolt-like pin.

12. A filter-frame latticework according to claim 10 or 11, characterised in that the formed projection (28), which is formed by pressing out, is integrally connected to the elongated limb (27.2) of the clamping hook (26).

13. A filter-frame latticework according to any of claims 7 to 12, characterised in that the hook-shaped angled portion (27.1) of the locking hook (26) forms with the elongated limb (27.2) of the latter an angle slightly greater than 90°.

14. A filter-frame latticework according to claim 13, characterised in that the angle between the elongated limb (27.2) and the hook-shaped angled portion (27.1) lies in the range from 93° to 96°.

15. A filter-frame latticework according to claim 13 or 14, characterised in that the inner side of the end wall (23) of each of the connection arms (21) of the assembly pieces (20) has an oblique position corresponding to the oblique position of the hook-shaped angled portion (27.1) of the clamping hook (26) and deviating from 90°.

16. A filter-frame latticework according to any of claims 1 to 15, characterised in that the end wall (23) of each of the connection arms (21) of the assembly pieces (20) has at least one protuberance (19), which can be introduced into the cavity of the end region of the associated box profile (11) of each of the profile portions (10).

17. A filter-frame latticework according to claim 16, characterised in that the protuberances (29) provided are a pair of strips, the outer sides of which can be placed with positive engagement against the inner sides of two mutually opposite walls of the box profile (11).

18. A filter-frame latticework according to claim 17, characterised in that the length of the strips forming the pair corresponds to the height of the cavity into which the strips can be introduced.

## Revendications

1. Treillis d'encadrement de filtres destiné à être équipé de cellules filtrantes pour l'épuration d'air, destiné en particulier à des parois ou des plafonds de filtrage de l'air d'admission de salles blanches, constitué d'éléments de montage (20) à deux, trois ou quatre branches et de barreaux profilés (10) reliant entre eux lesdits éléments de montage, chaque barreau profilé étant essentiellement constitué d'un profil en caisson (11) s'étendant longitudinalement sur lequel est formé au moins d'un côté une aile (12) constituant le support des cellules filtrantes, les bras des éléments de montage (20), en tant que bras de raccordement pour les barreaux profilés (10), prolongeant au moins le profil extérieur de ceux-ci dans la zone des ailes, tandis que les faces frontales orientées l'une vers l'autre de chaque barreau profilé et des bras de raccordement des éléments de montage correspondants sont réalisées de manière à constituer des faces mutuellement adaptées et pouvant être serrées l'une contre l'autre par des moyens d'assemblage avec interposition de joints, caractérisé en ce que le profil en caisson (11) des barreaux profilés (10) présente au moins une paroi intérieure (14.1) du genre traverse, en ce que le côté frontal de chacun des bras de raccordement (21) des éléments de montage (20) comporte, dans la zone qui prolonge le profil extérieur des barreaux profilés (10) une paroi frontale (23) recouvrant au moins partiellement l'espace creux du profil en caisson (11), et en ce que les moyens d'assemblage sont réalisés en forme d'éléments de traction qui sont en prise sur l'arrière de la paroi frontale (23) des bras de raccordement (21) des éléments de montage (20) et qui sont en prise de contre-appui dans la paroi interne (14.1) du genre traverse des profils en caisson (11).

2. Treillis d'encadrement de filtres selon la revendication 1, caractérisé en ce que la paroi interne du genre traverse (14.1) est réalisée en forme de traverse transversale orientée parallèlement à l'aile (12), l'arête supérieure de la paroi frontale (23) allant au moins jusqu'à l'arête supérieure de ladite paroi interne (14.1).

3. Treillis d'encadrement de filtres selon la revendication 1, caractérisé en ce que la paroi interne (14.1) du genre traverse est réalisée en forme de traverse orientée perpendiculairement à l'aile (12), cette traverse s'étendant de préférence centralement entre deux traverses transversales (14.2, 14.3) disposées parallèlement à l'aile à l'intérieur du profilé en caisson (11).

4. Treillis d'encadrement de filtres selon les revendications 2 ou 3, caractérisé en ce que l'élément de traction est réalisé sous la forme d'une vis (25), la tête de la vis étant en prise contre l'arrière de la paroi frontale (23) de la branche de raccordement (21) de l'élément de montage (20), cette paroi étant munie d'un alésage (24) pour le passage de la tige de ladite vis, et en ce que la paroi interne (14.1) du genre traverse comporte dans la zone terminale du barreau profilé (10) un filetage d'écrou (15) recevant le filetage de la tige de la vis.

5. Treillis d'encadrement de filtres selon la revendication 4, caractérisé par un canal traversant toute la paroi interne (14.1) du genre traverse et correspondant au diamètre de fond de filetage de la vis (25), ce canal étant muni du filetage d'écrou (15) dans les zones terminales du barreau profilé (10).

6. Treillis d'encadrement de filtres selon l'une des revendications 4 ou 5, caractérisé en ce que l'axe de la vis (25) s'étend à l'intérieur ou à proximité de la fibre neutre du profil du barreau profilé (10).

7. Treillis d'encadrement de filtres selon la revendication 2, caractérisé par le fait que le moyen de traction est réalisé en forme de crochet de serrage (26) dont l'extrémité recourbée en forme de crochet (27.1) vient en prise sur l'arrière de la paroi frontale (23) du bras de raccordement (21) de l'élément de montage (20) et qui peut être serré au moyen d'une vis de serrage (17) passant à travers un alésage (27.3) pratiqué dans l'extrémité étendue (27.2) du crochet de serrage (26), laquelle est munie de moyens servant de contre-appui sur la paroi interne (14.1) du genre traverse.

8. Treillis d'encadrement de filtres selon la revendication 7, caractérisé en ce que la paroi interne (14.1) du genre traverse présente un alésage fileté dans lequel la vis de serrage (17) peut être vissée et constitue, une fois vissée, le contre-appui.

9. Treillis d'encadrement de filtres selon la revendication 7, caractérisé en ce que la paroi interne (14.1) du genre traverse présente un évidement (19) qui coopère pour agir comme contre-appui avec une saillie (28) formée à proximité de l'extrémité libre de l'extrémité étendue (27.2) du crochet de serrage (26), la vis de serrage (17) pouvant être vissée dans un alésage fileté pratiqué dans la paroi frontale (23) du bras de raccordement (21) de l'élément de montage (20).

10. Treillis d'encadrement de filtres selon la revendication 9 , caractérisé en ce que la saillie (28) est réalisée sous forme de barrette et en ce que l'évidement (19) est réalisé sous forme de gorge recevant cette barrette.

11. Treillis d'encadrement de filtres selon la revendication 9, caractérisé en ce que la saillie (28) est réalisée sous la forme d'une goupille du genre tenon et en ce que l'évidement (19) est réalisé sous la forme d'un trou recevant cette goupille.

12. Treillis d'encadrement de filtres selon l'une des revendications 10 ou 11, caractérisé en ce que la saillie (28) constitue une seule pièce avec la branche étendue (27.2) du crochet de serrage (26).

13. Treillis d'encadrement de filtres selon l'une des revendications 7 à 12, caractérisé en ce que la partie coudée en forme de crochet (27.1) du crochet de serrage (26) forme un angle légèrement supérieur à 90° avec la branche étendue (27.2) de celui-ci.

14. Treillis d'encadrement de filtres selon la revendication 13, caractérisé en ce que l'angle entre la branche étendue (27.2) et la partie coudée en forme de crochet (27.1) se situe entre 93 et 96°.

15. Treillis d'encadrement de filtres selon les revendications 13 ou 14, caractérisé en ce que la face interne de la paroi frontale (23) de chacun des bras de raccordement (21) des éléments de montage (20) occupe une position oblique différente de 90° qui correspond à l'obliquité de la partie coudée en forme de crochet (27.1) du crochet de serrage (26).

16. Treillis d'encadrement de filtres selon l'une des revendications 1 à 15, caractérisé en ce que la paroi frontale (23) de chacun des bras de raccordement (21) des éléments de montage (20) présente au moins un ergot (29) qui peut être introduit dans l'espace creux de la partie terminale du profil en caisson (11) associé à chacun des barreaux profilés (10).

17. Treillis d'encadrement de filtres selon la revendication 16, caractérisé en ce qu'il est prévu comme ergots (29) deux barrettes dont les côtés extérieurs peuvent se placer en emboîtement contre les côtés intérieurs de deux parois se faisant mutuellement face du profil en caisson (11).

18. Treillis d'encadrement de filtres selon la revendication 17, caractérisé en ce que la longueur des deux barrettes correspond à la hauteur de l'espace creux dans lequel les deux barrettes peuvent être introduites.

Fig.1

Fig. 2a

Fig.2b

Fig.3

Fig. 2c

Fig. 5

14

Fig.4a

Fig.4b

Fig.6a

Fig.6b

EP 0 262 515 B1

Fig.7

17

Fig.8

EP 0 262 515 B1